# DEMANDE DE BREVET EUROPEEN

(11) **EP 4 664 339 A1**
(43) Date de publication de la demande: **17.12.2025**
(21) Numéro de dépôt: 25181648.4
(22) Date de dépôt: 10.06.2025
(51) Int. Cl.: G06F 30/15, G06F 30/18, G06F 30/20, G06F 113/16

(54) **PROCÉDÉ DE SIMULATION ET D ANALYSE D AU MOINS UN COURT-CIRCUIT ÉLECTRIQUE DANS UN SYSTÈME D'INTERCONNEXION DE CÂBLAGE ÉLECTRIQUE D'UN VÉHICULE, ET PROCÉDÉ DE CONCEPTION ET DE FABRICATION D'UN TEL SYSTÈME**

(30) Priorité: 10.06.2024 FR 2406101
(71) Demandeur: AIRBUS OPERATIONS (S.A.S.), 31060 Toulouse (FR)
(72) Inventeur: BEILVERT, Yoann, 31060 TOULOUSE (FR); CINAR, Cagatay, 31060 TOULOUSE (FR)
(74) Mandataire: Cabinet Le Guen Maillet

(57) **Abrégé**

Il est proposé un procédé de simulation et d'analyse d'au moins un court-circuit électrique dans un système d'interconnexion de câblage électrique (EWIS) d'un véhicule. Le résultat est un rapport sur la sécurité de l'EWIS, qui liste, pour un tronçon de route modélisé sélectionné (sur lequel est simulé au moins un court-circuit), les éventuelles informations fonctionnelles associées à un ou plusieurs tronçon(s) de route modélisé(s) impacté(s) par le au moins un court-circuit simulé. Il est également proposé un procédé de conception et de fabrication de l'EWIS, qui s'appuie sur le procédé de simulation et d'analyse. Ceci permet d'aider le fabricant à valider la conformité de l'EWIS (notamment les espacements entre les routes de câbles, pour éviter les risques en cas de court-circuit sur une de celles-ci) le plus tôt possible dans le processus de conception et de fabrication de ce système.

## Description

### DOMAINE TECHNIQUE

Le domaine de l'invention est celui des systèmes d'interconnexion de câblage électrique (ou EWIS pour « Electrical Wiring Interconnection System » en anglais) d'un véhicule.

La présente invention concerne un procédé de simulation et d'analyse d'au moins un court-circuit électrique dans un système d'interconnexion de câblage électrique (EWIS) d'un véhicule, ainsi qu'un procédé de conception et de fabrication d'un tel système.

### ETAT DE LA TECHNIQUE ANTERIEURE

Dans le cas où le véhicule est un aéronef, le système d'interconnexion de câblage électrique (EWIS) comprend « tout fil, câble, dispositif de câblage ou combinaison de ceux-ci, y compris les dispositifs de terminaison (c'est-à-dire la connectique associée), installé dans une zone quelconque de l'avion dans le but de transmettre de l'énergie électrique, y compris des données et des signaux entre deux ou plusieurs points de terminaison ».

L'EWIS permet la transmission aux pilotes des informations sur l'altitude, l'attitude, la vitesse de vol et de nombreux autres points de données provenant des capteurs. L'EWIS permet de transmettre les instructions des commandes des pilotes aux moteurs, aux gouvernails, aux ailerons et aux gouvernes de profondeur.

Le système d'interconnexion de câblage électrique (EWIS) des aéronefs modernes est complexe et dense. Les règles de conformité données par les autorités de l'aviation civile impliquent que les routes de câbles d'un EWIS soient espacées les unes des autres de distances minimales réglementaires. Hors du fait de l'encombrement dans les aéronefs, la tâche de concevoir un EWIS avec des routes de câbles espacées suffisamment pour répondre aux exigences susmentionnées est difficile

Il existe donc un besoin de fournir des outils de simulation et d'analyse pour aider les fabricants d'aéronef à valider la conformité réglementaire le plus tôt possible dans le processus de conception et de fabrication de l'EWIS.

### EXPOSE DE L'INVENTION

Il est proposé ici un procédé, implémenté par ordinateur, de simulation et d'analyse d'au moins un court-circuit électrique dans un système d'interconnexion de câblage électrique d'un véhicule, comprenant :
A) obtenir un modèle numérique 3D du système d'interconnexion de câblage électrique du véhicule, le modèle numérique comprenant des tronçons de route modélisés qui sont des objets 3D modélisant chacun un tronçon de route physique de câble(s) du système d'interconnexion de câblage électrique, chaque tronçon de route modélisé étant associé à une ou plusieurs informations fonctionnelles modélisant chacune un signal physique qui passe par ledit tronçon de route modélisé ;
B) sélectionner un des tronçons de route modélisés ;
C) simuler au moins un court-circuit électrique sur le tronçon de route modélisé sélectionné ;
D) déterminer, pour chaque court-circuit simulé, s'il existe au moins un autre tronçon de route modélisé qui est impacté par le court-circuit électrique simulé ; et
E) s'il existe au moins un autre tronçon de route modélisé qui est impacté, fournir un rapport sur la conformité du système d'interconnexion de câblage électrique du véhicule, le rapport sur la conformité comprenant, pour chaque court-circuit simulé sur le tronçon de route modélisé sélectionné, une liste comprenant, pour le ou chaque tronçon de route modélisé impacté par ledit court-circuit électrique, la ou les informations fonctionnelles associées audit tronçon de route modélisé impacté, ledit rapport sur la conformité étant destiné à être utilisé pour la conception et la fabrication du système d'interconnexion de câblage électrique du véhicule.

Ainsi, le procédé de simulation et d'analyse qui est proposé permet de fournir un rapport sur la conformité du système d'interconnexion de câblage électrique (EWIS) du véhicule. Ce rapport sur la conformité liste, pour un tronçon de route modélisé sélectionné (sur lequel est simulé au moins un court-circuit), les éventuelles informations fonctionnelles associées à un ou plusieurs tronçon(s) de route modélisé(s) impacté(s) par le au moins un court-circuit simulé. Ce rapport sur la conformité est destiné à être utilisé pour la conception et la fabrication du système d'interconnexion de câblage électrique du véhicule. En effet, avant la fabrication du système d'interconnexion de câblage électrique, le modèle numérique 3D de ce système (modèle sur lequel s'appuie la fabrication de ce système) peut être modifié en fonction de ce rapport sur la conformité. Par exemple, chaque information fonctionnelle listée dans le rapport est réaffectée (réassociée) à un tronçon de route modélisé qui n'est pas impacté par le au moins un court-circuit simulé. Dans le monde physique réel, ceci revient à faire passer dans un autre tronçon de route physique de câbles, le signal physique que modélise cette information fonctionnelle. Pour plus de détail sur l'utilisation du résultat du procédé de simulation et d'analyse (c'est-à-dire l'utilisation du rapport sur la conformité), voir ci-dessous la présentation du procédé de conception et de fabrication d'un système d'interconnexion de câblage électrique. En d'autres termes, le procédé de simulation et d'analyse qui est proposé permet d'aider le fabricant du système d'interconnexion de câblage électrique à valider la conformité réglementaire (notamment la certification électrique, et plus précisément les espacements entre les routes de câbles compris dans l'EWIS) le plus tôt possible dans le processus de conception et de fabrication de ce système. Le procédé de simulation et d'analyse qui est proposé permet également un gain de temps dans la conception et la fabrication du système d'interconnexion de câblage électrique (EWIS).

Dans un mode de réalisation particulier, le véhicule est un aéronef.

Selon un mode de réalisation particulier, au moins une nouvelle itération des opérations B) à E) est effectuée, avec un tronçon de route modélisé sélectionné différent.

Selon un mode de réalisation particulier, la liste comprend en outre, pour le tronçon de route modélisé sélectionné, la ou les informations fonctionnelles associées au tronçon de route modélisé sélectionné.

Selon un mode de réalisation particulier, simuler un court-circuit électrique donné sur le tronçon de route modélisé sélectionné comprend : positionner un volume de risque englobant une partie du tronçon de route modélisé sélectionné ; et déterminer, pour le court-circuit donné simulé, s'il existe au moins un autre tronçon de route modélisé qui est impacté par ledit au moins un court-circuit électrique simulé comprend : déterminer s'il existe au moins un autre tronçon de route modélisé qui touche ou est au moins partiellement contenu dans le volume de risque.

Selon un mode de réalisation particulier, le volume de risque est une sphère dont le centre est positionné au centre d'une section transversale circulaire du tronçon de route modélisé sélectionné, et dont le rayon R est fonction des paramètres suivants :
- r : un rayon d'une section transversale circulaire du tronçon de route modélisé sélectionné ;
- m : une marge de croissance du rayon r ; et
- c : une distance de dégagement qui est fonction d'un type de route associé au tronçon de route modélisé sélectionné.

Selon un mode de réalisation particulier, deux volumes de risque positionnés consécutivement sur le tronçon de route modélisé sélectionné ont un chevauchement compris entre 40% et 60%.

Il est également proposé un procédé de conception et de fabrication d'un système d'interconnexion de câblage électrique d'un véhicule, comprenant :
a) implémentation, par ordinateur, du procédé évoqué ci-dessus de simulation et d'analyse d'au moins un court-circuit électrique, selon l'un quelconque de ses modes de réalisation, en l'appliquant audit système d'interconnexion de câblage électrique dudit véhicule ;
b) si l'implémentation du procédé de simulation et d'analyse d'au moins un court-circuit électrique aboutit à la fourniture d'au moins un rapport sur la conformité du système d'interconnexion de câblage électrique du véhicule, modifier le modèle numérique 3D du système d'interconnexion de câblage électrique du véhicule en fonction dudit au moins un rapport sur la conformité ; et
c) fabriquer le système d'interconnexion de câblage électrique du véhicule, en fonction du modèle numérique 3D modifié si une modification du modèle numérique 3D a été effectuée, ou en fonction du modèle numérique 3D non modifié si aucune modification du modèle numérique 3D n'a été effectuée.

Ainsi, le procédé de conception et de fabrication qui est proposé s'appuie sur le procédé de simulation et d'analyse évoqué plus haut, et permet d'aider le fabricant du système d'interconnexion de câblage électrique (EWIS) à valider la conformité de ce système (notamment les espacements entre les routes de câbles, pour éviter les risques en cas de court-circuit sur une de celles-ci) le plus tôt possible dans le processus de conception et de fabrication de ce système.

Selon un mode de réalisation particulier, si une modification du modèle numérique 3D a été effectuée, une nouvelle itération des opérations a) et b) est effectuée avant de fabriquer le système d'interconnexion de câblage électrique du véhicule.

Il est aussi proposé un système de traitement de données comportant de la circuiterie électronique configurée pour implémenter le procédé de simulation et d'analyse évoqué ci-dessus, selon l'une quelconque de ses modes de réalisation.

Il est aussi proposé un produit programme d'ordinateur, comportant des instructions entraînant l'exécution, par un processeur, du procédé de simulation et d'analyse évoqué ci-dessus, selon l'un quelconque de ses modes de réalisation, lorsque lesdites instructions sont exécutées par le processeur.

Il est aussi proposé un support de stockage, stockant de telles instructions.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un exemple d'algorithme de simulation et d'analyse d'au moins un court-circuit électrique dans un système d'interconnexion de câblage électrique d'un véhicule, dans un mode de réalisation ;
[Fig. 2] illustre schématiquement un exemple d'algorithme de conception et de fabrication d'un système d'interconnexion de câblage électrique d'un véhicule, dans un mode de réalisation ;
[Fig. 3] illustre schématiquement un exemple d'une partie d'un modèle numérique 3D d'un système d'interconnexion de câblage électrique, dans lequel une pluralité de courts-circuits sont simulés sur l'un des tronçons de route modélisés ;
[Fig. 4] illustre schématiquement le chevauchement de deux sphères constituant des volumes de risque simulant des courts-circuits sur l'un des tronçons de route modélisés ; et
[Fig. 5] illustre schématiquement un exemple d'architecture matérielle d'un ordinateur (système de traitement de données) implémentant l'algorithme de simulation et d'analyse de la Fig. 1.

### EXPOSE DETAILLE DE MODES DE REALISATION

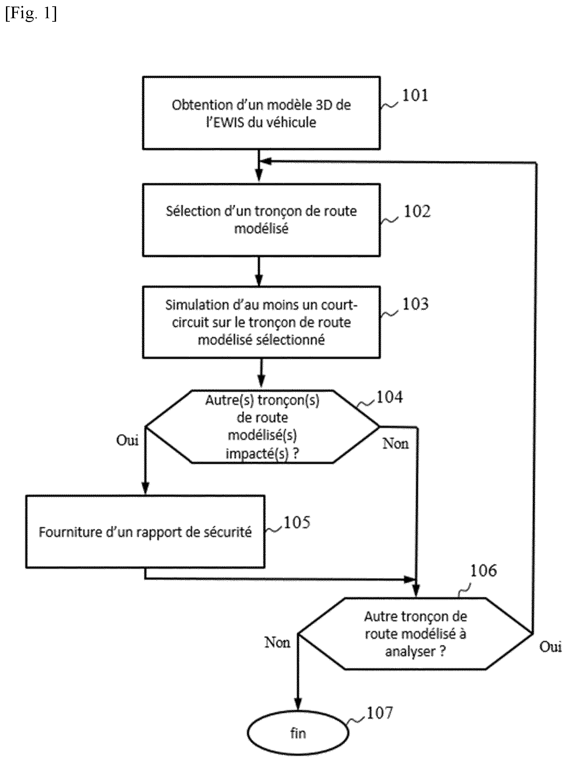

La Fig. 1 illustre schématiquement un exemple d'algorithme de simulation et d'analyse d'au moins un court-circuit électrique dans un système d'interconnexion de câblage électrique (aussi appelé par la suite « EWIS ») d'un véhicule, dans un mode de réalisation.

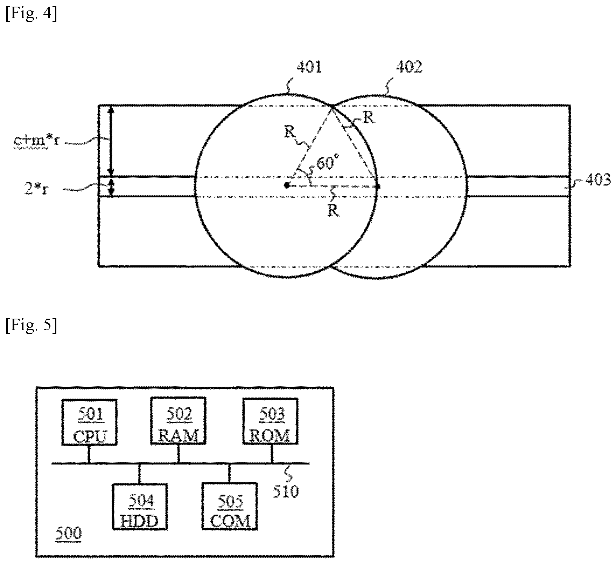

Cet algorithme est exécuté par un ordinateur (système de traitement de données comportant de la circuiterie électronique), qui est référencé 500 sur la Fig. 5.

Dans une implémentation particulière, le véhicule est un aéronef. Dans une variante, le véhicule est un navire. Dans une autre variante, le véhicule est une automobile.

Dans une étape 101, le système 500 obtient un modèle numérique 3D de l'EWIS du véhicule. Le modèle numérique comprend des tronçons de route modélisés (aussi appelés « models of pathways » en anglais), qui sont des objets 3D modélisant chacun un tronçon de route physique de câble(s) de l'EWIS. Un tronçon de route physique de câble(s) (« pathway » en anglais) est par exemple défini comme une partie d'un faisceau qui contient le même groupe de câbles sur toute sa longueur et qui est un tronçon de routage entre un élément de connexion (par exemple un connecteur) et une branche, entre deux éléments de connexion, ou encore entre deux branches.

Chaque tronçon de route modélisé est associé à une ou plusieurs informations fonctionnelles (aussi appelées « Topolink Way » en anglais), qui modélisent chacune un signal physique (d'un premier équipement vers un deuxième équipement) qui passe par le tronçon de route physique de câbles que modélise ce tronçon de route modélisé.

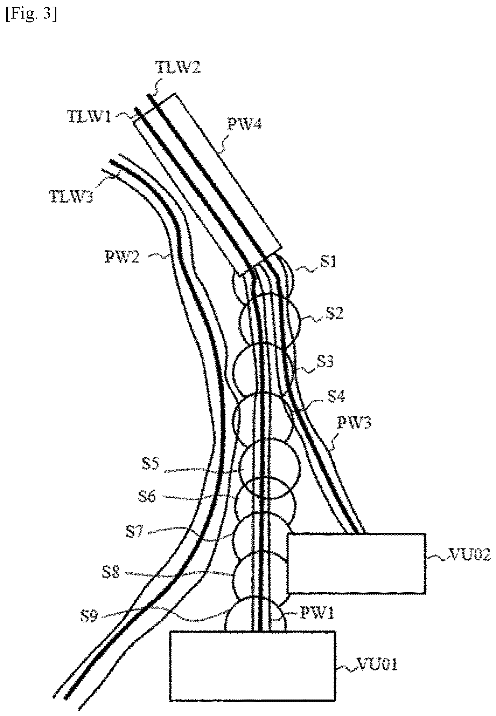

La Fig. 3 illustre schématiquement un exemple d'une partie d'un modèle numérique 3D d'un EWIS. Cette partie comprend quatre tronçons de route modélisés référencées PW1 à PW4 et deux unités virtuelles référencées VU01 et VU02. Le tronçon de route modélisé PW1 est associé à l'information fonctionnelle TLW1. Le tronçon de route modélisé PW2 est associé à l'information fonctionnelle TLW3. Le tronçon de route modélisé PW3 est associé à l'information fonctionnelle TLW2. Le tronçon de route modélisé PW4 est associé aux informations fonctionnelles TLW1 et TLW2.

Pour poursuivre la description de l'algorithme de la Fig. 1, dans une étape 102, le système 500 sélectionne un des tronçons de route modélisés. Dans une implémentation particulière, cette sélection s'effectue via une interface homme-machine, permettant à un utilisateur de faire un choix parmi une liste de tronçons de route modélisés et/ou sur une figure illustrant les tronçons de route modélisés.

Dans une étape 103, le système 500 simule au moins un court-circuit électrique sur le tronçon de route modélisé sélectionné.

Dans une implémentation particulière, la simulation d'un court-circuit électrique donné sur le tronçon de route modélisé sélectionné comprend le positionnement d'un volume de risque englobant une partie du tronçon de route modélisé sélectionné.

Dans une implémentation particulière, illustrée sur la Fig. 4, le volume de risque est une sphère qui représente l'arc électrique (voir sphères référencées 401 et 402) dont le centre est positionné au centre d'une section transversale circulaire du tronçon de route modélisé sélectionné 403, et dont le rayon R est fonction des paramètres suivants :
- r : un rayon d'une section transversale circulaire du tronçon de route modélisé sélectionné 403 ;
- m : une marge de croissance du rayon r (par défaut, m est par exemple égal à 10%) ; et
- c : une distance de dégagement qui est fonction d'un type de route associé au tronçon de route modélisé sélectionné (par exemple, dans le cas de l'EWIS d'un aéronef : c = 25 mm pour le type de route M, c = 37 mm pour le type de route P et c = 50 mm pour le type de route G).

Dans l'implémentation particulière illustrée sur la Fig. 4, le rayon R est plus précisément défini par la formule suivante : R = (r + r*m + c) / sin (60°).

Dans une implémentation particulière, des volumes de risque sont positionnés consécutivement sur toute la longueur du tronçon de route modélisé sélectionné 403, et deux volumes de risque positionnés consécutivement sur le tronçon de route modélisé sélectionné 403 ont un chevauchement compris entre 40% et 60%. Ceci permet de garantir une bonne simulation de courts-circuits sur toute la longueur du tronçon de route modélisé sélectionné 403. Par exemple, dans l'implémentation particulière illustrée sur la Fig. 4, les deux sphères 401 et 402 sont positionnées consécutivement sur le tronçon de route modélisé sélectionné 403 et ont un chevauchement égal à 50%. Par exemple, dans l'implémentation particulière illustrée sur la Fig. 3, le tronçon de route modélisé sélectionné est celui référencé PW1, et des sphères S1 à S9 sont positionnées consécutivement sur toute sa longueur.

Dans une étape de test 104, le système 500 détermine, pour le ou chaque court-circuit simulé, s'il existe au moins un autre tronçon de route modélisé qui est impacté par ledit au moins un court-circuit électrique simulé. Dans l'implémentation particulière précitée, où le volume de risque est une sphère, le système 500 détermine s'il existe au moins un autre tronçon de route modélisé qui touche ou est au moins partiellement contenu dans la sphère.

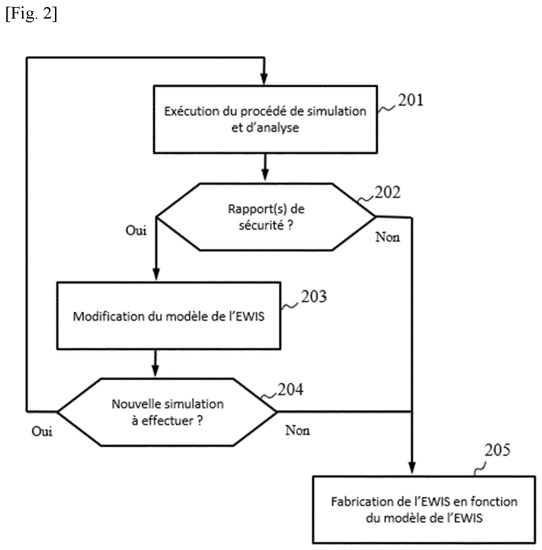

S'il existe au moins un autre tronçon de route modélisé qui est impacté (réponse positive à l'étape de test 104), le système 500 fournit un rapport sur la conformité de l'EWIS dans une étape 105, puis passe à l'étape 106 décrite ci-après. Ce rapport est destiné à être utilisé pour la conception et la fabrication de l'EWIS (voir ci-dessous la description de la **Fig.** 2). Sinon (réponse négative à l'étape de test 104), le système 500 passe directement à l'étape 106 décrite ci-après.

Le rapport sur la conformité comprend, pour chaque court-circuit simulé sur le tronçon de route modélisé sélectionné, une liste comprenant, pour le ou chaque tronçon de route modélisé impacté par ce court-circuit électrique simulé, la ou les informations fonctionnelles associées audit tronçon de route modélisé impacté. Dans une implémentation particulière, la liste comprend en outre (par exemple si au moins un tronçon de route modélisé impacté est associé à un type de route différent du type de route auquel est associé le tronçon de route modélisé sélectionné), pour le tronçon de route modélisé sélectionné, la ou les informations fonctionnelles associées à ce tronçon de route modélisé sélectionné.

Si on reprend l'implémentation particulière illustrée sur la Fig. 3, dans laquelle le tronçon de route modélisé sélectionné est celui référencé PW1, le rapport sur la conformité comprend par exemple :
- pour le court-circuit simulé par la sphère S1, une liste comprenant :
   ∘ pour le tronçon de route modélisé sélectionné PW1, l'information fonctionnelle TLW1 ;
   ∘ pour le tronçon de route modélisé impacté PW4, les informations fonctionnelles TLW1 et TLW2 ; et
   ∘ pour le tronçon de route modélisé impacté PW3, l'information fonctionnelle TLW2 ;
- pour le court-circuit simulé par la sphère S2, une liste comprenant :
   ∘ pour le tronçon de route modélisé sélectionné PW1, l'information fonctionnelle TLW1 ; et
   ∘ pour le tronçon de route modélisé impacté PW3, l'information fonctionnelle TLW2 ;
- pour le court-circuit simulé par la sphère S3, une liste comprenant :
   ∘ pour le tronçon de route modélisé sélectionné PW1, l'information fonctionnelle TLW1 ; et
   ∘ pour le tronçon de route modélisé impacté PW3, l'information fonctionnelle TLW2 ;
- pour le court-circuit simulé par la sphère S4, une liste comprenant :
   ∘ pour le tronçon de route modélisé sélectionné PW1, l'information fonctionnelle TLW1 ;
   ∘ pour le tronçon de route modélisé impacté PW2, l'information fonctionnelle TLW3 ; et
   ∘ pour le tronçon de route modélisé impacté PW3, l'information fonctionnelle TLW2.

Dans cet exemple, le rapport sur la conformité ne comprend pas de liste pour les courts-circuits simulés par les sphères S5 à S9 car il n'y a pas de tronçon de route modélisé impacté par ces courts-circuits électriques simulés.

Dans l'étape de test 106, le système 500 détermine si un autre tronçon de route modélisé doit être analysé. Dans l'affirmative (réponse positive à l'étape de test 106), le système 500 effectue une nouvelle itération des étapes 102 à 106, en sélectionnant à l'étape 102 cet autre tronçon de route modélisé devant être analysé. Dans la négative (réponse négative à l'étape de test 106), le système 500 passe à l'étape de fin 107.

La Fig. 2 illustre schématiquement un exemple d'algorithme de conception et de fabrication d'un système d'interconnexion de câblage électrique d'un véhicule donné, dans un mode de réalisation. Cet algorithme est exécuté au moins en partie par l'ordinateur (système de traitement de données comportant de la circuiterie électronique) référencé 500 sur la Fig. 5.

Dans une étape 201, le système 500 exécute l'algorithme de la figure 1 décrit plus haut (procédé de simulation et d'analyse d'au moins un court-circuit électrique dans un EWIS d'un véhicule), en l'appliquant à l'EWIS de ce véhicule donné. Le modèle numérique 3D de l'EWIS utilisé à l'étape 101 de la Fig. 1 est appelé « modèle numérique 3D courant ».

Dans une étape de test 202, le système 500 détermine (automatiquement ou via une interface homme-machine) si l'exécution de l'étape 201 aboutit à la fourniture d'au moins un rapport sur la conformité de l'EWIS.

En cas de réponse positive à l'étape de test 202, le système 500 passe à l'étape 203 dans laquelle il modifie (automatiquement ou via une interface homme-machine) le modèle numérique 3D courant en fonction du ou des rapports sur la conformité, afin d'obtenir un modèle numérique 3D modifié. Par exemple, chaque information fonctionnelle listée dans le rapport (et donc considérée comme perdue) est réaffectée (réassociée) à un tronçon de route modélisé qui n'est pas impacté par le(s) court(s)-circuit(s) simulé(s). Dans le monde physique réel, ceci revient à faire passer dans un autre tronçon de route physique de câbles, le signal physique que modélise cette information fonctionnelle.

Après l'étape 203, le système 500 passe à l'étape de test 204 dans laquelle il détermine (automatiquement ou via une interface homme-machine) si une nouvelle simulation doit être effectuée, c'est-à-dire si une nouvelle itération des étapes 201 à 204 doit être effectuée en utilisant le modèle numérique 3D modifié (qui devient le nouveau modèle numérique 3D courant). Dans l'affirmative (réponse positive à l'étape de test 204), le système 500 effectue cette nouvelle itération des étapes 201 à 204. Dans la négative (réponse négative à l'étape de test 204), le système 500 passe à l'étape 205.

En cas de réponse négative à l'étape de test 202, le système 500 passe directement à l'étape 205.

Dans l'étape 205, un fabriquant fabrique l'EWIS du véhicule donné, en fonction du modèle numérique 3D modifié, en cas de réponse positive à la dernière itération de l'étape de test 202, ou en fonction du modèle numérique 3D courant (non modifié), en cas de réponse négative à la dernière itération de l'étape de test 202.

Dans une variante d'implémentation, l'étape de test 204 est omise et une nouvelle itération des étapes 201 à 203 est systématiquement effectuée (en remplaçant le modèle numérique 3D courant par le modèle numérique 3D modifié) après l'exécution de l'étape 203.

La Fig. 5 illustre schématiquement un exemple d'architecture matérielle d'un ordinateur (ou système de traitement de données comportant de la circuiterie électronique) 500, qui comprend, reliés par un bus de communication 510 : un processeur ou CPU (« Central Processing Unit » en anglais) 501 ; une mémoire vive RAM (« Random Access Memory » en anglais) 502 ; une mémoire morte ROM (« Read Only Memory » en anglais) 503, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 504 ; au moins une interface de communication 505.

Le processeur 501 est capable d'exécuter des instructions chargées dans la RAM 502 à partir de la ROM 503, d'une mémoire externe (non représentée), d'un support de stockage (tel qu'une carte SD) ou d'un réseau de communication (non représenté). Lorsque le système de traitement de données 500 est mis sous tension, le processeur 501 est capable de lire de la RAM 502 des instructions et de les exécuter. Ces instructions forment un programme d'ordinateur causant l'implémentation, par le processeur 501, des comportements, étapes et algorithme décrits plus haut (notamment en relation avec les Figs. 1 à 4).

Tout ou partie des comportements, étapes et algorithme décrits plus haut peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, l'ordinateur 500 comprend de la circuiterie électronique agencée et configurée pour implémenter les comportements, étapes et algorithmes décrits plus haut.

## Revendications

1. Procédé de conception et de fabrication d'un système d'interconnexion de câblage électrique d'un véhicule, comprenant :
a) implémentation (201), par ordinateur (500), d'un procédé de simulation et d'analyse d'au moins un court-circuit électrique, le procédé de simulation et d'analyse étant appliqué audit système d'interconnexion de câblage électrique dudit véhicule et comprenant :
A) obtenir (101) un modèle numérique 3D du système d'interconnexion de câblage électrique du véhicule, le modèle numérique comprenant des tronçons de route modélisés (PW1 à PW4) qui sont des objets 3D modélisant chacun un tronçon de route physique de câble(s) du système d'interconnexion de câblage électrique, chaque tronçon de route modélisé étant associé à une ou plusieurs informations fonctionnelles (TLW1 à TLW3) modélisant chacune un signal physique qui passe par ledit tronçon de route modélisé ;
B) sélectionner (102) un des tronçons de route modélisés ;
C) simuler (103) au moins un court-circuit électrique sur le tronçon de route modélisé sélectionné ;
D) déterminer (104), pour chaque court-circuit simulé, s'il existe au moins un autre tronçon de route modélisé qui est impacté par le court-circuit électrique simulé ; et
E) s'il existe au moins un autre tronçon de route modélisé qui est impacté, fournir (105) un rapport sur la conformité du système d'interconnexion de câblage électrique du véhicule, le rapport sur la conformité comprenant, pour chaque court-circuit simulé sur le tronçon de route modélisé sélectionné, une liste comprenant, pour le ou chaque tronçon de route modélisé (PW1 à PW4) impacté par ledit court-circuit électrique simulé, la ou les informations fonctionnelles (TLW1 à TLW3) associées audit tronçon de route modélisé impacté ;
b) si l'implémentation du procédé de simulation et d'analyse d'au moins un court-circuit électrique aboutit à la fourniture d'au moins un rapport sur la conformité du système d'interconnexion de câblage électrique du véhicule, modifier (203) le modèle numérique 3D du système d'interconnexion de câblage électrique du véhicule en fonction dudit au moins un rapport sur la conformité, chaque information fonctionnelle listée dans le au moins un rapport sur la conformité étant réassociée à un tronçon de route modélisé qui n'est pas impacté par le au moins un court-circuit simulé ; et
c) fabriquer (205) le système d'interconnexion de câblage électrique du véhicule, en fonction du modèle numérique 3D modifié si une modification du modèle numérique 3D a été effectuée, ou en fonction du modèle numérique 3D non modifié si aucune modification du modèle numérique 3D n'a été effectuée.

2. Procédé selon la revendication 1, dans lequel au moins une nouvelle itération des opérations B) à E) est effectuée, avec un tronçon de route modélisé sélectionné différent (106).

3. Procédé selon l'une quelconque des revendications 1 à 2, dans lequel la liste comprend en outre, pour le tronçon de route modélisé sélectionné, la ou les informations fonctionnelles associées au tronçon de route modélisé sélectionné.

4. Procédé selon l'une quelconque des revendications 1 à 3, dans lequel simuler (103) un court-circuit électrique donné sur le tronçon de route modélisé sélectionné comprend :
positionner un volume de risque (S 1 à S9, 401, 402) englobant une partie du tronçon de route modélisé sélectionné (403),
et dans lequel déterminer (104), pour le court-circuit donné simulé, s'il existe au moins un autre tronçon de route modélisé qui est impacté par ledit au moins un court-circuit électrique simulé comprend : déterminer s'il existe au moins un autre tronçon de route modélisé qui touche ou est au moins partiellement contenu dans le volume de risque.

5. Procédé selon la revendication 4, dans lequel le volume de risque est une sphère (S1 à S9, 401, 402) dont le centre est positionné au centre d'une section transversale circulaire du tronçon de route modélisé sélectionné, et dont le rayon R est fonction des paramètres suivants :
- r : un rayon d'une section transversale circulaire du tronçon de route modélisé sélectionné ;
- m : une marge de croissance du rayon r ; et
- c : une distance de dégagement qui est fonction d'un type de route associé au tronçon de route modélisé sélectionné.

6. Procédé selon l'une quelconque des revendications 4 et 5, dans lequel deux volumes de risque (401, 402) positionnés consécutivement sur le tronçon de route modélisé sélectionné (403) ont un chevauchement compris entre 40% et 60%.

7. Procédé selon l'une quelconque des revendications 1 à 6, dans lequel, si une modification (203) du modèle numérique 3D a été effectuée, une nouvelle itération des opérations a) et b) est effectuée avant de fabriquer (205) le système d'interconnexion de câblage électrique du véhicule.
